**Europäisches Patentamt**

**European Patent Office**

**Office européen des brevets**

(19)

(11) Publication number : **0 284 572 B1**

(12) # EUROPEAN PATENT SPECIFICATION

(45) Date of publication of patent specification :
**21.11.91 Bulletin 91/47**

(51) Int. Cl.⁵ : **B62D 61/12**

(21) Application number : **88830104.1**

(22) Date of filing : **15.03.88**

(54) **Device for raising one of the axles of a semi-trailer road vehicle and lifting assembly therefor.**

(30) Priority : **27.03.87 IT 6724187**

(43) Date of publication of application :
**28.09.88 Bulletin 88/39**

(45) Publication of the grant of the patent :
**21.11.91 Bulletin 91/47**

(84) Designated Contracting States :
**AT BE CH DE ES FR GB GR LI LU NL SE**

(56) References cited :
**DE-A- 2 343 744**
**US-A- 3 201 141**
**US-A- 4 501 437**
**US-A- 4 530 515**

(73) Proprietor : **VIBERTI VEICOLI INDUSTRIALI S.r.l.**
**Viale G. Matteotti 99**
**I-10042 Nichelino (Torino) (IT)**

(72) Inventor : **Nobili, Roberto**
**Via Giorgio Vecco, 6**
**I-10098 Rivoli Torino (IT)**

(74) Representative : **Saconney, Piero et al**
**c/o JACOBACCI-CASETTA & PERANI S.p.A.**
**Via Alfieri, 17**
**I-10121 Torino (IT)**

EP 0 284 572 B1

## Description

The present invention relates to a device for raising one of the axles of a semi-trailer road vehicle having a plurality of rear axles, in accordance with the preamble of claim 1.

One example of such known devices is disclosed by the document US-A-3201141 which forms the basis of claim 1.

Devices of this kind have come into use recently on semi-trailers having a plurality of rear axles, for raising the wheels of an axle, in order to extend the service life of the tires when the vehicle travels unloaded.

The currently available devices are rather complex, and their installation requires components purposely designed for the suspension system of the semi-trailer, so that they lend themselves primarily for fitting during the building of the vehicle. It would be therefore desirable to provide a device of the type here considered which, in addition to being simple and economical, would lend itself for fitting not only in the course of the primary construction, serially or as an "optional" feature, but also for fitting additionally to vehicles already in use.

The object of the present invention is to provide a device of this kind and a lifting assembly being part of said device.

According to the present invention this is achieved by means of a device substantially as claimed in the characterising clause of claim 1.

In a device according to the invention, the lifting device is constituted very simply by a pneumatic lifting cell of a type known per se, and a pair of brackets which, as will be seen later, can be fastened simply, by means of bolting, to the median portion of the movable cross-member formed by the axle body, and to the median portion of the adjacent fixed cross-member of the chassis.

The invention will be better understood by a reading of the detailed description which follows, reference being made to the attached drawings, given by way of a non-limiting example and in which :

Figure 1 is a schematical view in elevation of a semi-trailer,

Figure 2 is a schematical plan view from above, partly in section, which shows the region of the chassis where the rear axles are located,

Figure 3 is a partial perspective view which shows the raisable axle, its lifting assembly, the corresponding cross-member of the chassis and the corresponding suspensions,

Figure 4 is a longitudinal section taken along the line IV-IV of Figure 3, and

Figure 5 is a diagram of the pneumatic circuit associated with the suspensions and with the lifting assembly.

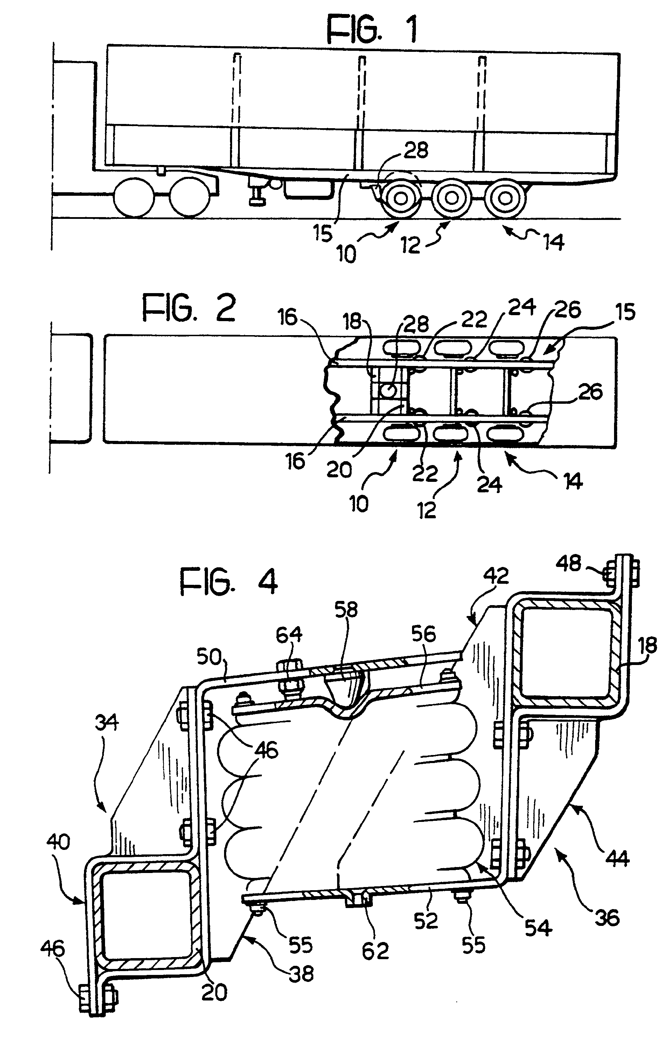

In Figures 1 and 2 a semi-trailer with three rear axles has been shown. The three axles are referenced 10, 12 and 14. The first axle 10 can be raised, as indicated schematically by the circle drawn in broken lines in Figure 1. The chassis 15 of the semi-trailer comprises two side-members 16 interconnected by several cross-members, one of which is referenced 18. A cross-member 20, constituting the body of the raisable axle 10, is located adjacent to chassis 15.

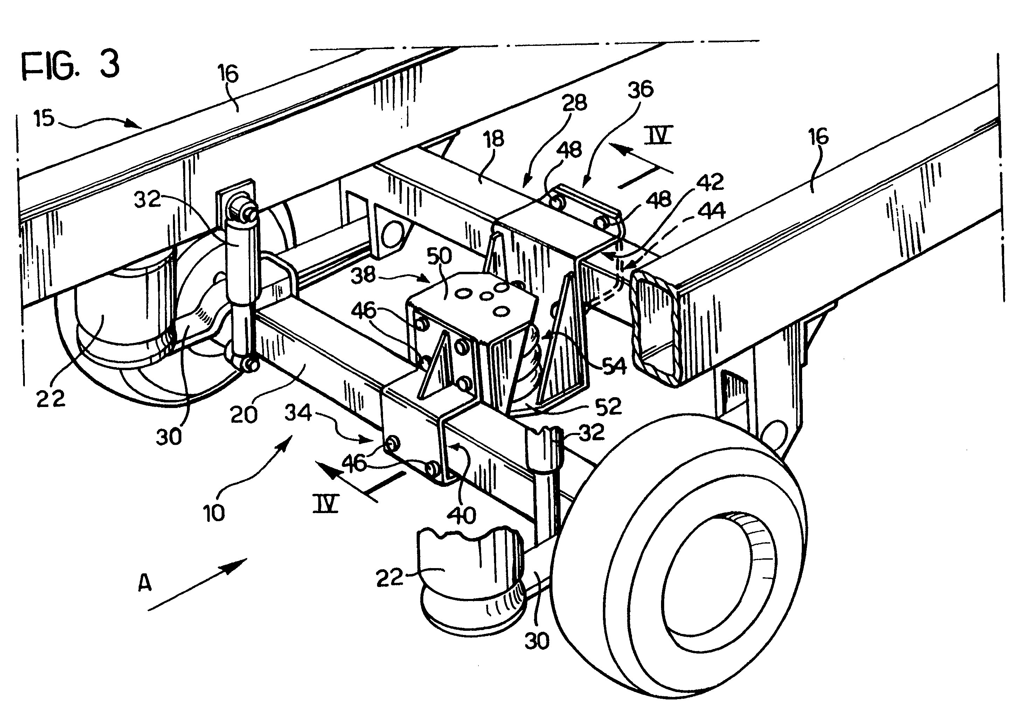

Figure 2 shows schematically at 22 the pneumatic cell of the suspension of the raisable axle 20, while the corresponding pneumatic cells of the other axles 12 and 14 are referenced 24 and 26. Reference 28 indicates schematically a lifting assembly which, as can be better seen in Figures 2 and 3, interconnects the body 20 of the raisable axle 10 with the adjacent cross-member 18 of chassis 15.

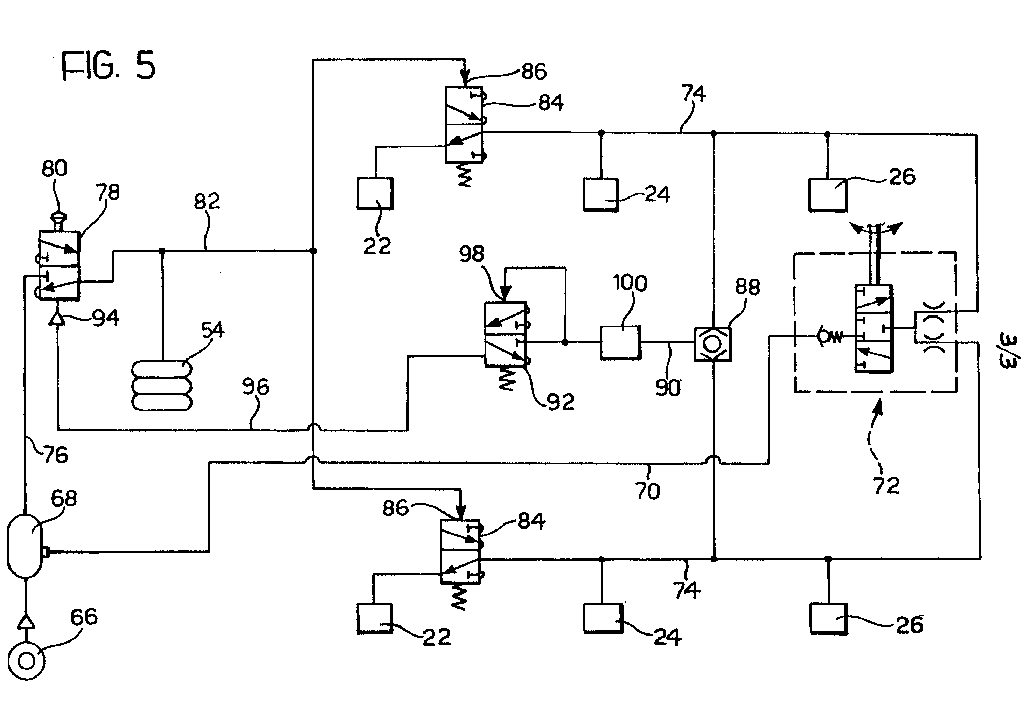

Reference will now be made to Figures 3 and 4, in which the principal elements mentioned above bear the same reference numerals and the details thereof are shown.

In Figure 3, the direction of travel is indicated by the arrow A.

As can be seen, the cross-member 18 of the chassis 15 and the cross-member or body 20 of the raisable axle 10 are composed of profiles of square cross-section.

The pneumatic suspension cells 22 by way of which the body 20 supports the chassis 15 are interposed between arms 30 fasten with the body 20 and the side-members 16. The body 20 and the side-members 16 are moreover interconnected by shock absorbers 32.

The lifting assembly 28 comprises a pair of brackets 34 and 36, respectively attached to the body 20 of the liftable axle 10 and to the cross-member 18 of the chassis 15, in the median portion of these elements. Preferably, as shown, the two brackets 34 and 36 are identical and are inversely positioned relative to each other. Each of them has a pair of elements, 38, 40 and 42, 44, respectively, made of heavy-gauge sheet metal, angled as shown and reinforced by angle-pieces (not referenced). As can be seen, the two elements 38 and 40 are shaped so as to embrace the body 20 in the manner of clamps and are bolted together by clamping bolts 46. In a similar manner, the two elements 42, 44 are shaped so as to embrace the cross-member 18 in the manner of clamps and are bolted together by clamping bolts 48.

The location of the lifting assembly 28 on the median portion of axle 10 makes it possible to achieve a balanced lifting of this axle by means of a single assembly.

The element 38 of the bracket 34 comprises an upper shelf portion 50 and the element 42 of the bracket 36 comprises a lower shelf portion 52. These shelf portions 50 and 52 are located one above the other and between them there is interposed a pneumatic cell 54. Preferably, as illustrated, the cell 54 is of the collar type. The base of cell 54 is fastened at 55 to the lower clamp element 52. The cell 54 has an upper rigid flange 56 which cooperates with the clamp element 50 by way of a rubber plug 58.

The lower clamp element 52 carries a connector 62 for linking the cell 54 to a pneumatic circuit which will be described later with reference to Figure 5.

The upper clamp element 50 is provided with a bolt 64 for limiting the compression of the plug 58.

As can be seen, the lifting device according to the invention does not contain any mechanical lifting components, and is therefore free of the problems due to wear and to play known to affect mechanical connections.

Reference will now be made to Figure 5 to describe the pneumatic circuit associated with the suspension cells 22, 24 and 26 and with the lifting cell 54.

Reference 66 indicates schematically the pressure source, that is to say, the compressed air intake of the tractor. Reference 68 shows the compressed air tank of the semi-trailer. From the tank 68 extends a pipe 70 which terminates in a levelling valve 72 of a type itself known, through which the tank is connected to the suspension cells 22, 24 and 26 of the two sides of the chassis, by means of respective pipes 74.

From the tank 68 extends another pipe 76 which leads to a primary pneumatic distributor 78 fitted with a manual control means 80. The control means 80 is normally located in an accessible position under one of the side-members of the chassis. Downstream of the primary distributor 78, a pipe 82 connects it, among others, to the lifting cell 54.

The primary distributor 78 is switchable between a first position, shown in Figure 5, in which the lifting cell 54 is isolated from the source 68, and a second position in which the lifting cell 54 communicates with the source 68.

Between the suspension cells 22 of the liftable axle 10 and the respective pipes 74 are interposed corresponding secondary distributors 84, each having a pneumatic actuator, as shown schematically at 86. The drive controls are connected to the pipe 82.

When there is no pressure in pipe 82, the distributors 84 are in a first condition, illustrated in Figure 5, in which the suspension cells 22 of the liftable axle 10 communicate with the source 68, by way of the levelling valve 72 and the pipes 74.

When the pipe 82 is under pressure, the distributors 84 are switched to the other position, in which the suspension cells 22 of the liftable axle 10 communicate with the atmosphere, whilst the other suspension cells 24 and 26 remain pressurized.

As will be understood, by lifting the axle 10 the control unit 80 is actuated so as to admit pressure into the lifting cell 54. This pressure operates the secondary distributors 84, discharging the suspension cells 22. In this manner, the compressed air can "inflate" the lifting cell 54, which, by its expansion, raises the whole of the axle 10, and this motion is not opposed by the suspension cells 22 which deflate. To lower again the axle 10, the control unit 80 is operated in reverse direction, so as to reinflate the suspension cells 22 and to drive the air from the lifting cell 54.

The circuit thus described is provided with an intrinsic safety means in case of a leak of compressed air from the lifting cell 54 : in this case, as the pressure falls in the pipe 82, the secondary distributors 84 return to the status in which they connect the suspension cells 22 with the pipes 74, and this independently of the status of the primary distributor 78. In this manner, the vehicle remains fully operational, with all its suspension cells 22, 24, 26 effective, even though the lifting cell 54 had broken down.

The circuit is preferably provided with another safety system which prevents that the liftable axle 10 should remain raised when the semi-trailer is loaded. This circumstance could arise due to an oversight by the driver who, having driven the empty vehicle to a loading location, forgets to lower the liftable axle.

This safety system is likewise illustrated in Figure 5.

To the two pipes 74 is linked, by way of a double non-return valve 88, a pipe 90 which terminates in a third pneumatic distributor 92. The primary distributor 78 is provided, in addition to a manual control 80, with a pneumatic actuator 94. This pneumatic actuator 94 is connected to the upstream side of the distributor 92 by a pipe 96.

The third distributor 92 is provided with a pneumatic control 98, which is connected in by-pass of a pipe 90 and which, for this reason, is under the same pressure as that which prevails in the suspension cells 24 and 26.

Under normal circumstances, the third distributor 92 is in a stable condition, illustrated in Figure 5, in which the communication between the pipes 90 and 96 is blocked and for which reason the pneumatic actuator 98 of the third distributor 92 is loaded so as to switch the distributor 92 into the other position in which pipes 90 and 96 are connected, when the pressure in suspension cells 24 and 26 rises above a predetermined pressure threshold. Assuming that the liftable axle 10 is raised, the pressure on the pneumatic control 94 brings about the switching of the primary distributor 78, so as to lower the axle 10.

As will be understood, the setting of the pneumatic control 98 will be such as to cause the switching of the third distributor 92 by the excessive increase of pressure in the suspension cells 24 and 26 due to the distribution of the weight of the goods loaded exclusively on the non-liftable axles 12 and 14, instead of on all its three axles 10, 12 and 14.

In the pipe 90 there is preferably interposed a pneumatic delay unit 100, which has a throttling effect and/or the capacity to delay the switching of the third distributor 98. This device constitutes a safety against a dangerous accidental lowering of the axle 10 raised during travel in case of overpressures due to transient overloads on suspension cells 24, 26, as may occur when passing over a ridge or in a curve.

## Claims

1. Device for raising one of the axles of a semi-trailer road vehicle having a plurality of rear axles (10, 12, 14) having axle bodies which are in the form of cross-members and support the chassis of the semi-trailer by way of corresponding pairs of pneumatic suspension cells (22, 24, 26) fed from a compressed air source (68), wherein the device comprises a lifting assembly (28) which includes a pneumatic lifting cell (54) interposed between a portion of the liftable axle (10) and the chassis (15) and expansible by the effect of the pressure of the compressed air source (68) to maintain in the raised position said axle (10) when its suspension cells (22) are load-free, and wherein the lifting assembly (28) comprises a pair of brackets (34, 36) fastened, respectively, to the body (20) of the liftable axle (10) and to a cross-member (18) of the chassis (15) adjacent to said body (20), which brackets (34, 36) have respective shelf portions (50, 52) facing each other, of which the shelf portion (50) of the bracket (34) fastened to the axle body (20) overhangs the shelf portion (52) of the bracket (36) fastened to the cross-member (18), and the pneumatic lifting cell (54) is interposed between these shelf portions (50, 52), characterised in that each of the two brackets (34, 36) comprises two sheet metal elements (38, 40 ; 42, 44), shaped so as to surround the body (20) or the cross-member (18) in the manner of clamps, interconnected by means of clamping bolts (46, 48) around the body (20) or around the cross-member (18), and that one of said elements (38, 42) of each bracket (34, 36) comprises the corresponding shelf portion (50, 52).

2. Device according to claim 1, for axle bodies and chassis cross-members having identical square sections, characterised in that the two brackets (34, 36) are identical to each other and are located inversely relative to each other.

3. Device according to claim 1, characterised in that the pneumatic lifting cell (54) is of the collar type.

4. Device according to any of claims 1 to 3, characterised in that the two brackets (34, 36) are fastened to the median portion of the body (20) of the liftable axle (10) and of the cross-member (18) of the chassis (15).

5. Device according to claim 1, characterised in that a pneumatic circuit is so arranged as to admit compressed air into the lifting cell (54) whilst discharging at the same time the suspension cells (22) of the liftable axle (10), and inversely.

6. Device according to claim 5, characterised in that the aforementioned pneumatic circuit comprises:

— a manually controlled (80) primary distributor (78), pneumatically connected in between the source (68) and the lifting cell (54) and switchable from a first state in which the lifting cell (54) is isolated from the source (68) and communicates with the atmosphere, and a second state in which the lifting cell (54) communicates with the source (68), and

— a pair of secondary distributors (84) with pneumatic control (86) connected pneumatically each between one of the pneumatic suspension cells (22) of the liftable axle (10) and the other pneumatic cells (24, 26) of the corresponding side of the vehicle and being jointly switchable between a first state in which the suspension cells (22) of the liftable axle (10) communicate with the source (68) as do all other suspension cells (24, 26), and a second state in which the suspension cells (22) of the liftable axle (10) are isolated from the source (68) and from the other suspension cells (24, 26) and communicate with the atmosphere, the pneumatic actuators (86) of the secondary distributors (84) being pneumatically connected to the lifting cell (54) and being adapted to switch the secondary distributors (84) from the first to the second state under the effect of the pressure fed to the lifting cell (54) from the source (68) through the primary distributor (78), and the secondary distributors (84) being reversible from the second to the first state by the effect of discharge of pressure from their pneumatic actuators (86) following the return of the primary distributor (78) to the initial state or in consequence of an escape of air from the lifting cell (54).

7. Device according to claim 6, characterised in that the primary distributor (78) is further provided with a pneumatic actuator (94) to be switched from the second to the first state, and that said device further comprises a third distributor (92) with a pneumatic actuator (98), which third distributor (92) is pneumatically connected in between the suspension cells (24, 26) of the non-liftable axles (12, 14) and the actuator (94) of the primary distributor (78) and is adapted to be switched from a first stable position in which the actuator (94) of the primary distributor (78) is isolated from said suspension cells (24, 26) and a second position in which the actuator (94) of the primary distributor (78) communicates with said cells, and that the actuator (98) of the third distributor (92) is connected pneumatically to the suspension cells (24, 26) of the non-liftable axles (12, 14) and is set in such a manner as to switch the third distributor (92) from the first to the second state when a preset pressure threshold is exceeded in these cells (24, 26), to cause the lowering of the liftable axle (10) when the load on the non-liftable axles (12, 14) exceeds a predetermined threshold.

8. Device according to claim 7, characterised in that between the suspension cells (24, 26) of the non-liftable axles (12, 14) and the actuator (98) of the third distributor (92) there is interposed a delay unit (100) to prevent the third distributor (92) from responding to transient overpressures.

**Patentansprüche**

1. Vorrichtung zum Anheben von einer Achse eines Sattelschlepper-Straßenfahrzeugs, das eine Vielzahl von Hinterachsen (10, 12, 14) besitzt, die Achsenkörper enthalten, die in Form von Querelementen ausgebildet sind und das Chassis des Sattelschleppers über entsprechende Paare von pneumatischen Tragzellen (22, 24, 26) tragen, die von einer Druckluftquelle (68) gespeist werden, wobei die Vorrichtung einen Hubaufbau (28) besitzt, der eine pneumatische Hubzelle (54) aufweist, die zwischen einem Teil der anhebbaren Achse (10) und dem Chassis (15) liegt und durch die Wirkung des Drucks der Druckluftquelle (68) ausgedehnt werden kann, um die Achse (10) in der angehobenen Stellung zu halten, wenn ihre Tragzellen (22) unbelastet sind, und wobei der Hubaufbau (28) ein Paar von Trägern (34, 36) besitzt, die jeweils am Körper (20) der anhebbaren Achse (10) und einem Querelement (18) des Chassis (15) neben dem Körper (20) befestigt sind, wobei die Träger (34, 36) entsprechende Plattenteile (50, 52) besitzen, die einander gegenüberliegen, wobei der Plattenteil (50) des Trägers (34), der am Achsenkörper (20) befestigt ist, über dem Plattenteil (52) des Trägers (36) hängt, der am Querelement (18) befestigt ist, und wobei die pneumatische Hubzelle (54) zwischen diesen Plattenteilen (50, 52) liegt, dadurch gekennzeichnet, daß jeder der beiden Träger (34, 36) zwei Blechelemente (38, 40 ; 42, 44) enthält, die so ausgebildet sind, daß sie den Körper (20) oder das Querelement (18) klammerartig umschließen, wobei sie über Befestigungsschrauben (46, 48) um den Körper (20) oder um das Querelement (18) miteinander verbunden sind, und daß eines der Elemente (38, 42) eines jeden Trägers (34, 36) den entsprechenden Plattenteil (50, 52) enthält.

2. Vorrichtung gemäß Anspruch 1 für Achsenkörper und Chassis-Querelemente mit identen Querschnitten, dadurch gekennzeichnet, daß die beiden Träger (34, 36) einander ident sind und relativ zueinander umgekehrt angeordnet werden.

3. Vorrichtung gemäß Anspruch 1, dadurch gekennzeichnet, daß die pneumatische Hubzelle (54) ringartig ausgebildet ist.

4. Vorrichtung gemäß jedem der Ansprüche 1 bis 3, dadurch gekennzeichnet, daß die beiden Träger (34, 36) am Mittelteil des Körpers (20) der anhebbaren Achse (10) und des Querelements (18) des Chassis (15) befestigt sind.

5. Vorrichtung gemäß Anspruch 1, dadurch gekennzeichnet, daß ein Pneumatikkreis so aufgebaut ist, um den Eintritt von Druckluft in die Hubzelle (54) zu ermöglichen, während gleichzeitig die Tragzellen (22) der anhebbaren Achse (10) entladen werden, und umgekehrt.

6. Vorrichtung gemäß Anspruch 5, dadurch gekennzeichnet, daß der oben erwähnte Pneumatikkreis enthält :

— einen händisch gesteuerten (80) Primärverteiler (78), der pneumatisch zwischen der Quelle (68) und der Hubzelle (54) liegt und von einem ersten Zustand, in dem die Hubzelle (54) von der Quelle (68) getrennt ist und mit der Außenluft in Verbindung steht, und einem zweiten Zustand umschaltbar ist, in dem die Hubzelle (54) mit der Quelle (68) in Verbindung steht, und

— ein Paar von Sekundärverteilern (84) mit einer pneumatischen Steuerung (86), die pneumatisch zwischen einer der pneumatischen Zellen (22) der anhebbaren Achse (10) und den anderen pneumatischen Zellen (24, 26) der entsprechenden Seite des Fahrzeugs liegen, wobei sie zwischen einem ersten Zustand, in dem die Tragzellen (22) der anhebbaren Achse (10) mit der Quelle (68) in Verbindung stehen, wie dies auch bei allen anderen Tragzellen (24, 26) der Fall ist, und einem zweiten Zustand umschaltbar sind, in dem die Tragzellen (22) der anhebbaren Achse (10) von der Quelle (68) sowie von den anderen Tragzellen (24, 26) getrennt sind und mit der Außenluft in Verbindung stehen, wobei die pneumatischen Stellantriebe (86) der Sekundärverteiler (84) pneumatisch mit der Hubzelle (54) verbunden und so aufgebaut sind, um die Sekundärverteiler (84) aus dem ersten Zustand in den zweiten Zustand unter der Wirkung des Drucks umzuschalten, der der Hubzelle (54) von der Quelle (68) durch den ersten Verteiler (78) zugeführt wird, und wobei die Sekundärverteiler (84) vom zweiten Zustand in den ersten Zustand durch die Wirkung einer Druckentladung aus ihren pneumatischen Stellantrieben (86), worauf die Rückkehr des Primärverteilers (78) in den Anfangszustand folgt, oder infolge eines Luftaustritts aus der Hubzelle (54) zurückgebracht werden können.

7. Vorrichtung gemäß Anspruch 6, dadurch gekennzeichnet, daß der Primärverteiler (78) weiters mit einem pneumatischen Stellantrieb (94) versehen ist, um aus dem zweiten in den ersten Zustand umgeschaltet zu werden, und daß die Vorrichtung weiters einen dritten Verteiler (92) mit einem pneumatischen Stellantrieb (98) enthält, wobei der dritte Verteiler (92) pneumatisch zwischen den Tragzellen (24, 26) der nichtanhebbaren Achsen (12, 14) und dem Stellantrieb (94) des Primärverteilers (78) liegt und so aufgebaut ist, daß er aus einer ersten stabilen Stellung, in der der Stellantrieb (94) des Primärverteilers (78) von den Tragzellen (24, 26) getrennt ist, und einer zweiten Stellung umschaltbar ist, in der der Stellantrieb (94) des Primärverteilers (78) mit den Zellen in Verbindung steht, und daß der Stellantrieb (98) des dritten Verteilers (92) pneumatisch mit den Tragzellen (24, 26) der nichtanhebbaren Achsen (12, 14) verbunden ist, wobei er so eingestellt wird, um den dritten Verteiler (92) aus dem ersten Zustand in den zweiten Zustand umzuschalten, wenn in diesen Zellen (24, 26) ein voreingestellter Druckschwellwert überschritten wird, um das Absenken der anhebbaren Achse (10) hervorzurufen, wenn die Last auf den nichtanhebbaren Achsen (12, 14) einen vorgegebenen Schwellwert überschreitet.

8. Vorrichtung gemäß Anspruch 7, dadurch gekennzeichnet, daß zwischen den Tragzellen (24, 26) der nichtanhebbaren Achsen (12, 14) und dem Stellantrieb (98) des dritten Verteilers (92) eine Verzögerungsstufe (100) liegt, um zu verhindern, daß der dritte Verteiler (92) auf vorübergehende Werte eines Überdrucks anspricht.

## Revendications

1. Dispositif pour lever l'un des essieux d'un véhicule routier semi-remorque comportant une pluralité d'essieux arrière (10, 12, 14) comprenant des corps d'essieux qui sont sous forme de traverses et supportent le châssis d'une semi-remorque par l'intermédiaire de paires correspondantes de cellules de suspension pneumatiques (22, 24, 26) alimentées à partir d'une source d'air comprimé (68), le dispositif comportant un ensemble de levage (28) qui comprend une cellule de levage pneumatique (54), interposée entre une portion de l'essieu relevable (10) et le châssis (15), expansible sous l'effet de la pression de la source d'air comprimé (68) pour maintenir ledit essieu (10) dans la position levée lorsque ses cellules de suspension (22) ne sont pas chargées, l'ensemble de levage (28) comportant une paire de consoles (34, 36) fixées, respectivement, au corps (20) de l'essieu relevable (10) et à une traverse (18) du châssis (15) voisine dudit corps (20), consoles (34, 36) qui présentent des portions respectives (50, 52) formant tablettes qui se font face l'une à l'autre et dont la portion (50), formant tablette, de la console (34) fixée au corps d'essieu (20) vient, en porte-à-faux, au-dessus de la portion (52), formant tablette, de la console (36) fixée à la traverse (18) et que la cellule (54) de levage pneumatique est interposée entre ces portions (50, 52) formant tablettes, caractérisé en ce que chacune des deux consoles (34, 36) comporte deux éléments en tôle métallique (38, 40 ; 42, 44) ayant une forme propre à entourer le corps (20) ou la traverse (18) à la façon de colliers, interconnectés au moyen de boulons (46, 48) de bridage, autour du corps (20) ou autour de la traverse (18) ; et en ce que l'un desdits éléments (38, 42) de chaque console (34, 36) comporte la portion correspondante formant tablette (50, 52).

2. Dispositif selon la revendication 1, pour corps d'essieux et traverses de châssis de sections carrées identiques, caractérisé en ce que les deux consoles (34, 36) sont l'une et l'autre identiques et sont placées en position inverse l'une par rapport à l'autre.

3. Dispositif selon la revendication 1, caractérisé en ce que la cellule (54) de levage pneumatique est du type à viroles.

4. Dispositif selon l'une des revendications 1 à 3, caractérisé en ce que les deux consoles (34, 36) sont fixées à la portion médiane du corps (20) de l'essieu relevable (10) et de la traverse (18) du châssis (15).

5. Dispositif selon la revendication 1, caractérisé en ce qu'un circuit pneumatique est disposé de façon à admettre l'air comprimé dans la cellule de levage (54) tout en vidant simultanément les cellules de suspension (22) de l'essieu relevable (10) et inversement.

6. Dispositif selon la revendication 5, caractérisé en ce que le circuit pneumatique susvisé comporte :
—un distributeur primaire (78) à commande manuelle (80), relié pneumatiquement entre la source (68) et la cellule de levage (54) et pouvant commuter pour passer d'un premier état, dans lequel la cellule de levage (54) est isolée de la source (68) et communique avec l'atmosphère, à un second état dans lequel la cellule de levage (54) communique avec la source (68) et
— une paire de distributeurs secondaires (84) à commande pneumatique (86), chacun relié pneumatiquement entre l'une des cellules pneumatiques (22) de suspension de l'essieu relevable (10) et les autres cellules pneumatiques (24, 26) du côté correspondant du véhicule et pouvant, ensemble, commuter entre un premier état, dans lequel les cellules de suspension (22) de l'essieu relevable (10) communiquent avec la source (68), comme le font toutes les autres cellules de suspension (24, 26), et un second état, dans lequel les cellules de suspension (22) de l'essieu relevable (10) sont isolées de la source (68) et des autres cellules de suspension (24, 26) et communiquent avec l'atmosphère, les actionneurs pneumatiques (86) des distributeurs secondaires (84) étant pneumatiquement reliés à la cellule de levage (54) et étant conçus pour faire commuter les distributeurs secondaires (84) du premier état au second état sous l'effet de la pression envoyée dans la cellule de levage (54), depuis la source (68) par l'intermédiaire du distributeur primaire (78), et les distributeurs secondaires (84) pouvant repasser du second état au premier état sous l'effet de la mise hors pression de leurs actionneurs pneumatiques (86) faisant suite au retour du distributeur primaire (78) à l'état initial, ou en conséquence d'une fuite d'air hors de la cellule de levage (54).

7. Dispositif selon la revendication 6, caractérisé en ce que le distributeur primaire (78) comporte en outre un actionneur pneumatique (94) qui peut commuter entre le second et le premier état ; et en ce que ledit dispositif comporte en outre un troisième distributeur (92) comprenant un actionneur pneumatique (98), lequel troisième distributeur (92) est pneumatiquement relié entre les cellules de suspension (24, 26) des essieux non relevables (12, 14) et l'actionneur (94) du distributeur primaire (78) et est conçu pour commuter entre une première position stable, dans laquelle l'actionneur (94) du distributeur primaire (78) est isolé d'avec lesdites cellules de suspension (24, 26), et une seconde position, dans laquelle l'actionneur (94) du distributeur primaire (78) communique avec lesdites cellules ; et en ce que l'actionneur (98) du troisième distributeur (92) est relié pneumatiquement aux cellules de suspension (24, 26) des essieux non relevables (12, 14) et est réglé de façon à faire commuter le troisième distributeur (92) du premier état au second état lorsqu'une valeur de seuil de pression prédéterminée est dépassée dans ces cellules (24, 26) pour provoquer la descente de l'essieu relevable (10) lorsque la charge des essieux non relevables (12, 14) dépasse une valeur de seuil prédéterminée.

8. Dispositif selon la revendication 7, caractérisé en ce qu'entre les cellules de suspension (24, 26) des essieux non relevables (12, 14) et l'actionneur (98) du troisième distributeur (92) est interposée une unité de temporisation (100) pour éviter que le troisième distributeur (92) ne réagisse à des surpressions transitoires.

# FIG. 1

# FIG. 2

# FIG. 4

# FIG. 3

FIG. 5

EP 0 284 572 B1